# EUROPEAN PATENT APPLICATION

(11) **EP 4 538 872 A1**
(43) Date of publication of application: **16.04.2025**
(21) Application number: 23830466.1
(22) Date of filing: 29.06.2023
(51) Int. Cl.: G06F 8/70, G06F 8/71, G06F 9/445, G06F 8/61

(54) **APPLICATION MANAGEMENT METHOD, APPLICATION SUBSCRIPTION METHOD, AND RELATED DEVICE**

(30) Priority: 30.06.2022 CN 202210760285
(71) Applicant: Beijing Wellintech Co., Ltd., Beijing 100086 (CN)
(72) Inventor: LIN, Wei, Beijing 100086 (CN)
(74) Representative: Cabinet Camus Lebkiri
(86) International application number: PCT/CN2023/104203
(87) International publication number: WO 2024/002302

(57) **Abstract**

The present application relates to the technical field of software, and particularly relates to an application management method, an application subscription method, and a related device. The method in the present application comprises: acquiring a data model of a first application, wherein the data model of the first application comprises a program code used for implementing the function of the first application; and according to the data model of the first application, generating a program entity corresponding to the first application. In the present application, a program entity of an application can be obtained by means of objectifying a data model or program code of the application, and the development and operation management of the application within a full life cycle are realized on the basis of the program entity of the application.

## Description

The present disclosure claims a priority to the Chinese Patent Application No. 202210760285.3, filed on June 30, 2022, which is hereby incorporated by reference in its entirety.

### TECHNICAL FIELD

The present disclosure relates to the field of software technology, and in particular to an application management method, an application subscription method and a related device.

### BACKGROUND

Application (APP) lifecycle management (application lifecycle management, ALM) refers to the management of the entire process of an application from requirement gathering, programming, and testing to release.

The development of an APP needs to realize a function by writing codes. At the same time, during the development process of APP, APP codes need to be continuously debugged and developed until the function of the APP may be realized. These processes are source code level management, and the APP may usually be managed through a code version management tool, such as TFS, Git, and GitHub. However, an administrative right is also to control at a file level and a directory level, and it is impossible to manage the APP at a deeper level.

Of course, a developer may also manage an APP by building an integrated platform. However, the integrated platform can only manage the source codes of the APP, and is not suitable for managing the lifecycle of the APP.

### SUMMARY

The present disclosure provides an application management method, an application subscription method and a related device, which can manage the lifecycle of an APP.

Technical solutions of the present disclosure are as follows.

In a first aspect, the present disclosure provides an application management method, where the method includes: acquiring a data model of a first application, where the data model of the first application includes program codes for implementing a function of the first application; and generating a program entity corresponding to the first application according to the data model of the first application.

In some implementations, the data model includes an attribute, and the attribute of the first application includes at least one of a name and version information of the first application.

In some implementations, the attribute of the first application further includes an identifier of the data model of the first application, where the identifier of the data model has uniqueness.

In some implementations, the attribute of the first application further includes at least one of a deployment node corresponding to the first application and a running resource corresponding to the first application.

In some implementations, the above method of "generating the program entity corresponding to the first application according to the data model of the first application" specifically includes: determining configuration information of the first application according to the data model of the first application, where the configuration information of the first application is used to indicate a configuration value of the attribute of the data model of the first application; and creating the program entity corresponding to the first application according to the configuration information of the first application.

In some implementations, the data model of the first application is further used to indicate the function of the first application.

In some implementations, the method further includes: determining the running resource corresponding to the first application, and running the program entity corresponding to the first application on the running resource corresponding to the first application.

In a second aspect, the present disclosure provides an application management apparatus, where the apparatus may be configured to implement the application management methods according to the first aspect and any one of possible implementations of the first aspect. Functions of the apparatus may be implemented by hardware, or by hardware executing corresponding software. The hardware or software includes one or more modules or units corresponding to the steps in the application management methods according to the first aspect and any one of possible implementations of the first aspect.

For example, the apparatus includes: an acquiring module, configured to acquire a data model of a first application, where the data model of the first application includes program codes for implementing a function of the first application; and a generating module, configured to generate a program entity corresponding to the first application according to the data model of the first application.

In some implementations, the data model includes an attribute, and the attribute of the first application includes at least one of a name and version information of the first application.

In some implementations, the attribute of the first application further includes an identifier of the data model of the first application, where the identifier of the data model has uniqueness.

In some implementations, the attribute of the first application further includes at least one of a deployment node corresponding to the first application and a running resource corresponding to the first application.

In some implementations, the generating module is specifically configured to: determine configuration information of the first application according to the data model of the first application, where the configuration information of the first application is used to indicate a configuration value of the attribute of the data model of the first application; and create a program entity of the first application according to the configuration information of the first application.

In some implementations, the data model of the first application is further used to indicate the function of the first application.

In some implementations, the apparatus further includes a determining module, configured to determine the running resource corresponding to the first application, and run the program entity corresponding to the first application on the running resource corresponding to the first application.

In a third aspect, the present disclosure provides an electronic device, for example, the electronic device may be a hardware device corresponding to an application store according to the above first aspect. The electronic device includes: a processor, and a memory that may store instructions executable by the processor; when the processor is configured to execute the instructions, so that the electronic device is enabled to implement the methods according to the first aspect and any one of possible implementations of the first aspect.

In a fourth aspect, the present disclosure provides a computer readable storage medium, where computer program instructions are stored on the computer readable storage medium; when the computer program instructions are executed by an electronic device, so that the electronic device is enabled to implement the methods according to the first aspect and any one of possible implementations of the first aspect.

In a fifth aspect, the present disclosure provides a computer program product, including computer readable codes, or non-volatile computer readable storage medium carrying the computer readable codes, where when the computer readable codes are executed on an electronic device, a processor of the electronic device implements the methods according to the first aspect and any one of possible implementations of the first aspect.

In a sixth aspect, the present disclosure provides an application subscription method, where the method includes: acquiring a data model of a first application, where the data model of the first application includes program codes for implementing a function of the first application; generating a program entity corresponding to the first application according to the data model of the first application; receiving subscription information for subscribing information of the first application; and transmitting first indication information related to a running state of the program entity corresponding to the first application.

In some implementations, the above method of "generating the program entity corresponding to the first application according to the data model of the first application" specifically includes: determining configuration information of the first application according to the data model of the first application, where the configuration information of the first application is used to indicate a configuration value of an attribute of the data model of the first application; and creating the program entity corresponding to the first application according to the configuration information of the first application.

In some implementations, the first indication information includes a state of the program entity corresponding to the first application;
where the state of the program entity includes any one of a creation state, a running state and a termination state of the program entity.

In some implementations, the subscription information is further used to subscribe a preset event related to the first application and change information of the attribute of the first application.

In some implementations, the method further includes: in a case where the state of the program entity corresponding to the first application changes, transmitting first notification information, where the first notification information is used to notify that the state of the program entity corresponding to the first application has changed.

In some implementations, the method further includes: receiving query information, where the query information is used to query information of the first application, where the information of the first application includes information of a first attribute of the first application and information of a second attribute of the first application; transmitting a query result, where the query result is used to indicate the information of the first application.

In some implementations, the information of the first attribute includes at least: identification information of the data model of the first application; the information of the second attribute includes at least: a name of the attribute of the first application and identification information of the attribute of the first application.

In some implementations, the above method of "querying the program entity of the first application" specifically includes: searching for a program entity of the first application according to the identification information of the data model of the first application; and counting a number of the program entities of the first application.

In some implementations, the above method of "querying the program entity of the first application" specifically includes: searching for a state of the program entity of the first application according to the identification information of the data model of the first application.

In some implementations, the above method of "querying the program entity of the first application" specifically includes: searching for a state of the program entity of the first application according to the identification information of the data model indicated by the configuration information of the first application.

In a seventh aspect, the present disclosure provides an application subscription apparatus, where the apparatus may be configured to implement the application subscription method according to the sixth aspect and any one of possible implementations of the sixth aspect. Functions of the apparatus may be implemented by hardware, or by hardware executing corresponding software. The hardware or software includes one or more modules or units corresponding to the steps in the application subscription method according to the sixth aspect and any one of possible implementations of the sixth aspect.

For example, the apparatus includes: an acquiring module, configured to acquire a data model of a first application, where the data model of the first application includes program codes for implementing a function of the first application; a generating module, configured to generate a program entity corresponding to the first application according to the data model of the first application; a receiving module, configured to receive subscription information for subscribing information of the first application; and a transmitting module, configured to transmit first indication information related to a running state of the program entity corresponding to the first application.

In some implementations, the generating module is specifically configured to: determine configuration information of the first application according to the data model of the first application, where the configuration information of the first application is used to indicate a configuration value of an attribute of the data model of the first application; and create a program entity of the first application according to the configuration information of the first application.

In some implementations, the first indication information includes a state of the program entity corresponding to the first application; where the state of the program entity includes any one of a creation state, a running state and a termination state of the program entity.

In some implementations, the subscription information is further used to subscribe a preset event related to the first application and change information of the attribute of the first application.

In some implementations, the transmitting module is further configured to: transmit first notification information in a case where the state of the program entity corresponding to the first application changes, where the first notification information is used to notify that the state of the program entity corresponding to the first application has changed.

In some implementations, the receiving module is further configured to receive query information, where the query information is used to query information of the first application, where the information of the first application includes information of a first attribute of the first application and information of a second attribute of the first application; the transmitting module is further configured to transmit a query result, where the query result is used to indicate the information of the first application.

In some implementations, the information of the first attribute includes at least: identification information of the data model of the first application; the information of the second attribute includes at least: a name of the attribute of the first application and identification information of the attribute of the first application.

In some implementations, the apparatus further includes: a query module, configured to search for a program entity of the first application according to identification information of the data model of the first application; and count a number of the program entities of the first application.

In some implementations, the query module is specifically configured to search for the state of the program entity of the first application according to the identification information of the data model of the first application.

In some implementations, the query module is specifically configured to search for the state of the program entity of the first application according to the identification information of the data model indicated by the configuration information of the first application.

In an eighth aspect, the present disclosure provides an electronic device, for example the electronic device may be a hardware device corresponding to an application store according to the above first aspect. The electronic device includes: a processor, and a memory that may store instructions executable by the processor; when the processor is configured to execute the instructions, so that the electronic device is enabled to implement the methods according to the sixth aspect and any one of possible implementations of the sixth aspect.

In a ninth aspect, the present disclosure provides a computer readable storage medium, and computer program instructions are stored on the computer readable storage medium; when the computer program instructions are executed by an electronic device, so that the electronic device is enabled to implement the methods according to the sixth aspect and any one of possible implementations of the sixth aspect.

In a tenth aspect, the present disclosure provides a computer program product, including computer readable codes, or non-volatile computer readable storage medium carrying the computer readable codes, where when the computer readable codes are executed on an electronic device, a processor of the electronic device implements the methods according to the sixth aspect and any one of possible implementations of the sixth aspect.

Based on any one of the first aspect to the tenth aspect above, the present disclosure has at least the following beneficial effects.

In the present disclosure, the program entity of the application is obtained by objectifying the data model or program codes of the application. Since the program entity of the application may be used to describe running program codes, and for example, may describe the state in which the program codes are running. Furthermore, the application-based program entity may manage the running process of the application. In other words, the management of the development and running of for full lifecycle of the application is realized.

It should be understood that the general description above and the detailed description below are only exemplary and illustrative, and cannot limit the present disclosure.

### BRIEF DESCRIPTION OF THE DRAWINGS

The accompanying drawings herein are incorporated into the specification and constitute a part of the specification to illustrate embodiments consistent with the present disclosure, which are used to explain the principles of the present disclosure together with the specification, and do not constitute improper limitations on the present disclosure.
FIG. 1 is a flow schematic diagram of an application management method provided by the embodiments of the present disclosure.
FIG. 2 is a schematic diagram of a type of a data model provided by the embodiments of the present disclosure.
FIG. 3 is a flow schematic diagram of an application subscription method provided by the embodiments of the present disclosure.
FIG. 4 is a flow schematic diagram of another application subscription method provided by the embodiments of the present disclosure.
FIG. 5 is a flow schematic diagram of an application management method provided by the embodiments of the present disclosure.
FIG. 6 is a structural schematic diagram of a data model and a predefinition provided by the embodiments of the present disclosure.
FIG. 7 is a structural schematic diagram of a data model provided by the embodiments of the present disclosure.
FIG. 8 is a structural schematic diagram of an application management apparatus provided by the embodiments of the present disclosure.
FIG. 9 is a structural schematic diagram of an application subscription apparatus provided by the embodiments of the present disclosure.

### DETAILED DESCRIPTION

In order to enable those skilled in the art to better understand the technical solutions in the present disclosure, the technical solutions in the embodiments of the present disclosure will be described clearly and completely in conjunction with the accompanying drawings.

It should be noted that terms "first" and "second", etc., in the specification, claims and the above-mentioned drawings of the present disclosure are used for distinguishing between similar objects, but not necessarily used for describing a particular order or precedence order. It should be understood that such used terms are interchangeable under appropriate circumstances such that the embodiments of the present disclosure described herein are capable of being practiced in a sequence in addition to those illustrated or described herein. The implementations described in the following exemplary embodiments do not represent all implementations consistent with the present disclosure, and rather, are merely examples of apparatuses and methods consistent with some aspects of the present disclosure as described in detail in the appended claims.

It should also be understood that the term "comprise/include" and variations thereof indicate the presence of described features, integers, steps, operations, elements and/or components, but do not exclude the presence or addition of one or more other features, integers, steps, operations, elements and/or components.

"And/or" is used to illustrate an association relationship between associated objects, which represents that there may be three kinds of relationships. For example, A and/or B may represent these three conditions: A exists alone, both A and B exist, or B exists alone. A character "/" generally means that there is an "or" relationship between related objects before and after the character "/".

The development of an APP needs to realize a function by writing codes. Applications may usually be managed based on files and directories of the applications through a code version management tool, such as TFS, Git, and GitHub. However, an administrative right is also to control at a file level and a directory level, and it is impossible to manage the application at a deeper level.

In addition, during the development process of the APP, the APP needs to be continuously debugged and adjusted, then developed and debugged again, until a function of the application is normal, and then deployed and run. These processes are managed at a source code level and may be implemented based on an integrated development tool. The integrated development tool may include open source Jenkins, DevOps platforms, etc.

As a function of APP becomes more and more complex, a plurality of basic APPs are usually integrated to complete a certain complex system function. Now, a function of a complex APP is usually implemented through code-level integration. For example, the management of files and directories of the APP may be implemented through a code version management tool, such as Team Foundation Server (team foundation server, TFS), Git, and GitHub. An administrative right is to control at the file level and directory level of the APP. However, this management manner has poor encapsulation and poor confidentiality during code-based reuse or transactions, while binary-based reuse and verification are not easy to modify, and a user needs to perform compatibility processing. And further, this management manner does not have a mechanism to facilitate the integration of apps from other organizations, and may only be iterated within an organization, which cannot quickly enrich industrial apps to form an ecosystem.

In addition, Jenkins requires developers to select or develop related tools to construct a continuous integration platform, which is not universal and has a high construction cost. A commercial DevOps platform is suitable for the development of source code for several specific languages, and the management goal of the commercial DevOps platform is the source code, not the app, which is not suitable for managing the full lifecycle of the app.

Based on this, the embodiments of the present disclosure provide an application management method, through which the source code, configuration information, and binary program of the APP may be objectified, thereby achieving the management of the full lifecycle of the APP.

Exemplarily, the method may be specifically implemented in an operation and maintenance system or a module (such as an operation control module) in the operation and maintenance system, or in a hardware device corresponding to the operation and maintenance system. For example: the hardware device may include a server or a hardware device of a server, a computer or a hardware device of a computer, etc. Herein, the server may be a separate server, or may be a server cluster composed of a plurality of servers. In some implementations, the server cluster may be a distributed cluster. A specific implementation of the hardware device corresponding to the operation and maintenance system is not limited in the embodiments of the present disclosure. In the embodiments of the present disclosure, a running system is taken as the executing subject as an example for explanation.

It should be noted that implementation steps for an operation and maintenance system side involved in the embodiments of the present disclosure may all be implemented by the hardware device corresponding to the operation and maintenance system.

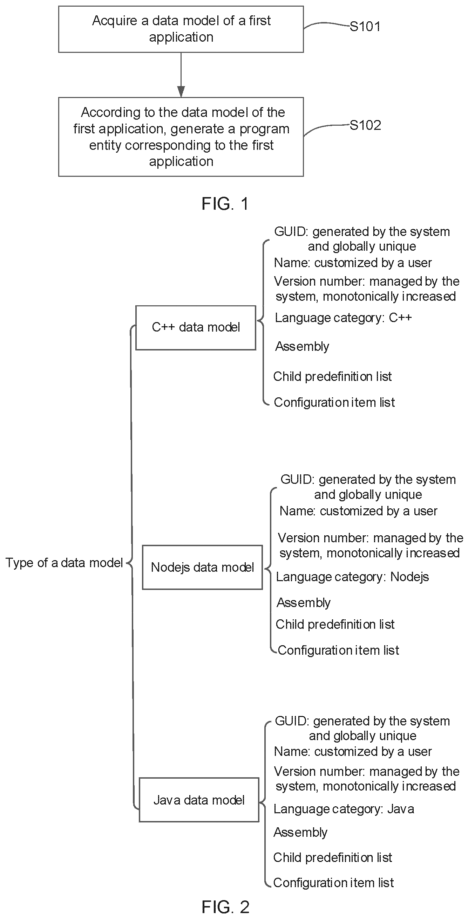

FIG. 1 is a flow schematic diagram of an application management method provided by the embodiments of the present disclosure. As shown in FIG. 1, the application management method may include S101 to S102.

In S101, a data model of a first application is acquired.

Herein, the data model of the first application may be used to indicate a function of the first application. For example, the data model of the first application may include program codes of the first application. The program codes of the first application may be used to implement a function of the first application.

Herein, the data model of the first application may further include an attribute. The attribute of the first application may be used to describe information of the first application.

For example, the attribute of the first application may include at least one of a name and version information of the first application. Of course, the attribute of the first application may further include other parameters, and for example, may further include an identifier, a type, etc., of the data model of the first application. The identifier of the data model is used to uniquely identify the data model. The identifier of the data model may be a globally unique identifier (globally unique identifier, GUID). The identifier of the data model of the first application may be determined when the data model of the first application is generated (for example, may be customized by a user), and the data model of the first application remains unchanged during the lifecycle of the first application.

For another example, the attribute of the first application may further include at least one of a deployment node of the first application and a running resource of the first application.

Furthermore, as shown in FIG. 2, the type of the data model may include a C++ data model, a Nodejs data model, a Java data model, etc.

Herein, configuration information of different types of the data model may all include a GUID, a name, a version number, a language category, an assembly, a child predefinition list, and a configuration item list. These pieces of configuration information are described respectively as follows.
1. A GUID may be generated for the development system and is globally unique. A name may be customized by a user.
2. A version number may be managed by the development system, and consecutive version numbers may be monotonically increased.
3. A language category may refer to a programming language of program codes. For example, a language category of the C++ data model is C++, a language category of the Nodejs data model is Nodejs, and a language category of the Java data model is Java.
4. The assembly, i.e., program codes, may include command lines, source codes, a binary, etc.

Herein, the command lines refer to command lines to be executed when the application is loaded and run, for example, a name of the program to be started, a command parameter to be passed in, a registration command, etc.

The source codes may refer to source codes and used resource files (may be null). Other users may purchase an original license to view and use the source codes. The source codes may include C++ source codes, Nodejs's JavaScript source codes, Java source codes, etc.

The runtime binary may include a binary program package. Since C++ is not cross-platform, the binary of the assembly of the C++ data model is platform-specific. For example, a platform may include a general Linux platform, a general Windows platform, Android, Mac, etc. The runtime binary in the assembly of the Java data model is cross-platform and only needs to store a class file or a jar package.

5. The child predefinition list may be a predefinition generated by the data model, without limitation on a language category.

6. The configuration item list may be a defined configuration item (key-value) list.

It should be noted that the above types of data models are only exemplary and other types of data models may also be included.

In a possible implementation, the development system may acquire the data model of the first application by interacting with a device corresponding to a development studio of the first application. For example, the development studio of the first application may transmit the data model of the first application to the development system in response to an upload operation.

In S102, a program entity corresponding to the first application is generated according to the data model of the first application.

Herein, the program entity corresponding to the first application may also be referred to as an application (running) object, which may refer to an actually running program, or may be used to describe an actually running program, and for example, may describe the deployment node, a running state, a running resource (such as a central processing unit (Central Processing Unit, CPU), a memory) and other information of the application.

In a possible implementation, the operation and maintenance system may determine the configuration information of the first application according to the data model of the first application, and create the program entity corresponding to the first application according to the configuration information of the first application.

Herein, the configuration information of the first application refers to attribute information of the data model of the first application. For example, the configuration information of the first application may include one or more of the name of the first application, the identifier (e.g., GUID) of the first application, the identifier (e.g., GUID) and version number of the data model of the first application, and the configuration value of the attribute of the first application.

Furthermore, the configuration information of the first application may further include a deployment node of the first application, a running resource of the first application, etc. In this way, the management system may determine the running resource corresponding to the first application according to the configuration information of the first application.

In the embodiment of the present disclosure, the program entity of the application is obtained by objectifying the data model or program codes of the application. Since the program entity of the application may be used to describe running program codes, and for example, may describe the deployment node, a state, a running resource, etc., of the program codes. Furthermore, the management of the program codes, a deployment node, and a running resource of the application may be implemented by the application-based program entity. In other words, the management of development and running for the full lifecycle of the application are implemented.

In a possible embodiment, the method provided by the embodiment of the present disclosure may further include: determining the running resource of the first application, and running the program entity corresponding to the first application on the running resource of the first application.

Herein, the running resource of the first application may include a CPU, a memory, etc., configured when the first application is running.

In a possible implementation, the operation and maintenance system may acquire a running node and a running resource corresponding to the first application from the configuration information of the first application. Then, the operation and maintenance system may transmit running instruction information to the running node, so that the running node uses the running resource to run the program entity corresponding to the first application.

Herein, the running instruction information may be used to indicate the running node to run the first application and the running resource required for running the first application. In this way, the running node may allocate a corresponding running resource to the first application according to the running instruction information, and use the running resource to run the program entity of the first application.

Furthermore, when the running result of the program entity of the first application is normal (for example, the function of the first application may be implemented), the data model of the first application may be uploaded to the target node (such as the application store). In this way, the first application may be used and further developed by other users.

Based on this possible embodiment, the operation and maintenance system may deploy the program entity of the first application on the running resource of the first application after the running resource of the first application is determined. Thus, the management of deployment for the lifecycle of the application is implemented.

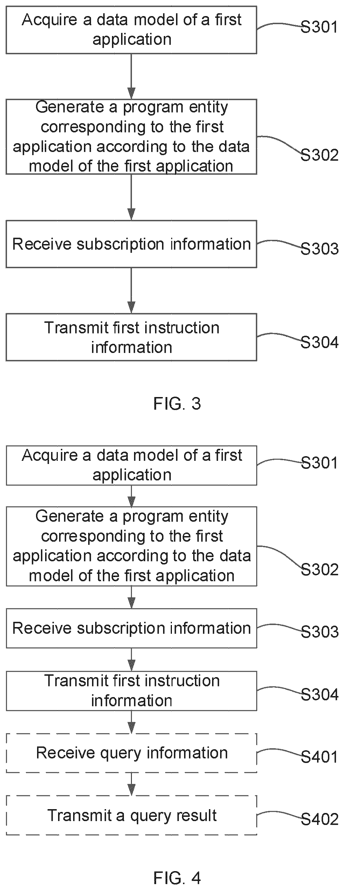

In a possible embodiment, in order to facilitate a user to acquire related information of the application in the operation and maintenance system timely, the embodiments of the present disclosure further provide an application subscription method. As shown in FIG. 3, the method may include S301 to S304.

In S301, a data model of a first application is acquired.

In S302, a program entity corresponding to the first application is generated according to the data model of the first application.

Herein, S301 and S302 may refer to the description of the above S101 and S102, which will not be repeated herein.

In S303, subscription information is received.

Herein, the subscription information is used to subscribe information of the first application. For example, the subscription information may include information of the subscribing user, an identifier of the first application, etc. The information of the subscribing user may include an account of the subscribing user, an identifier of the used device, etc. The information of the first application may include a state of the program entity corresponding to the first application, and may further include configuration information and information of the attribute of the first application, etc.

In an example, the state of the program entity may include any one of a creation state, a running state, and a termination state of the program entity.

In a possible implementation, the subscribing user may transmit subscription information to the running system through the used device. Correspondingly, the running system may receive the subscription information.

Furthermore, the subscription information may further be used to subscribe a preset event related to the first application and change information of the first application.

Herein, the preset event may include an adding event, a modifying event, a deleting event, etc. For example, the adding event may refer to that a new configuration item is added to the configuration information of the first application. The modifying event may refer to that a configuration item of the configuration information of the first application is modified. The deleting event may refer to that a configuration item of the configuration information of the first application is deleted.

Herein, the change information of the first application may be change information of the attribute of the first application, change information of the attribute of the second application related to the first application, etc.

In S304, the first indication information is transmitted.

Herein, the first indication information is related to the running state of the program entity of the first application. For example, the first indication information may include a state of a program entity corresponding to the first application. The state of the program entity may include a creation state, a running state, and a termination state of the program entity. For another example, the first indication information may be used to indicate whether the state of the program entity of the first application is abnormal.

In an example, when the first indication information is used to indicate whether the state of the program entity of the first application is abnormal, the first indication information may include a first identifier. The first identifier may be used to indicate whether the state of the program entity of the first application is normal. The first identifier may be a number, a character, or a combination of the number and character. For example, when the first identifier is a first indicator, it represents that the state of the program entity of the first application is normal; when the first identifier is a second indicator, it represents that the state of the program entity of the first application is abnormal. The first indicator and the second indicator are different.

For example, when the running state of the program entity of the first application is abnormal, the first indication information may further include information about the abnormal running state of the program entity of the first application (e.g., an abnormal cause, an abnormal code, an occurrence time, etc.).

In a possible implementation, after the subscription information is received, the operation and maintenance system may monitor the state of the first application according to the identifier of the first application of the subscription information, and transmit the detected state of the first application to the device used by the subscribing user. For example, the operation and maintenance system may periodically detect the state of the first application. In this way, the operation and maintenance system may transmit the information required by the subscribing user to the subscribing user timely and rapidly.

Furthermore, when the first application may also invoke the second application to implement the function of the second application, the first indication information may also be used to indicate the state of the second application. That is, the first indication information may be used to indicate the state of the first application and the state of the second application. For example, the first indication information may include the state of the first application and/or the state of the second application.

Based on the above S301 to S304, after the program entity of the first application is generated according to the data model of the application, the operation and maintenance system may transmit information related to the running state of the program entity of the application to the user in response to the subscription information of the user, thereby achieving access management to the application.

In a possible embodiment, after the operation and maintenance system receives the user's subscription information for the first application, the method may further include: transmitting first notification information when a change in the state of the program entity corresponding to the first application is detected.

Herein, the first notification information may be used to notify that the state of the program entity corresponding to the first application has changed. For example, the first notification information may include the second identifier. The second identifier may be used to identify that the state of the program entity corresponding to the first application has changed. For another example, the first notification information may include a changed state of the program entity corresponding to the first application. For example, when the program entity corresponding to the first application changes from a running state to a termination running, the first notification information may include first state information. The first state information may represent that the program entity corresponding to the first application terminates running. For example, the first state information may include APP1-END. APP1 represents the program entity corresponding to the first application, and the END represents the termination of the running.

Based on this embodiment, when a change in the state of the program entity corresponding to the first application is detected, the notification information may be transmitted to a subscribing user, so that the subscribing user may know that the subscribed state of the application has changed timely, thereby achieving management of the state of the application.

Further, in order to facilitate the user to query the related information of the first application, as shown in FIG. 4, the method provided by the embodiments of the present disclosure may further include: S401 and S402.

In S401, query information is received.

Herein, the query information may be used to query information of the first application. For example, the information of the first application may include information of a first attribute of the first application and information of a second attribute of the first application. For example, the information of the first attribute may include at least identification information of the data model of the first application. The information of the second attribute may include at least the name of the attribute of the first application and identification information of the attribute of the first application.

In an example, the query information may include an identifier of the first application, an identifier of the data model of the first application, or an identifier of configuration information of the first application. Based on the identifier, the operation and maintenance system may search for information of the first application.

In a possible implementation, a user (who may be a subscribing user or not) may transmit the query information to the operation and maintenance system through a used device. In response, the operation and maintenance system may receive the query information from the subscribing user and query the information of the first application.

Specifically, the operation and maintenance information may query the information of the first application in the following manners.

Manner 1: the operation and maintenance system may search for a program entity/entities of the first application according to the identification information of the data model of the first application, and count a number of the program entity/entities of the first application.

Manner 2: the operation and maintenance system may search for a state of the program entity of the first application according to the identification information of the data model of the first application.

Manner 3: the operation and maintenance system may query a state of the program entity of the first application according to the identification information of the data model indicated by the configuration information of the first application.

In S402, a query result is transmitted.

Herein, the query result is used to indicate the information of the first application. For example, the query result may include information of the first attribute of the first application and information of the second attribute of the first application.

Based on the technical solutions shown in FIG. 4, after the query information is received, the development system may determine the related information of the application according to the query information. Then, the related information of the application is transmitted to the corresponding user, thereby achieving the corresponding query management while the personalized needs of users are satisfied.

The above embodiments describe the management method for the full lifecycle of the application from the perspective of a single application. The full lifecycle of a plurality of applications with associated relationships will be explained below.

It should be noted that a plurality of applications with an associated relationship may refer to a plurality of applications having a parent-child relationship. For example, the plurality of applications with the associated relationship include a first application and a second application, and the second application may be a parent application of the first application. That is, the second application may invoke the first application to implement the function of the first application.

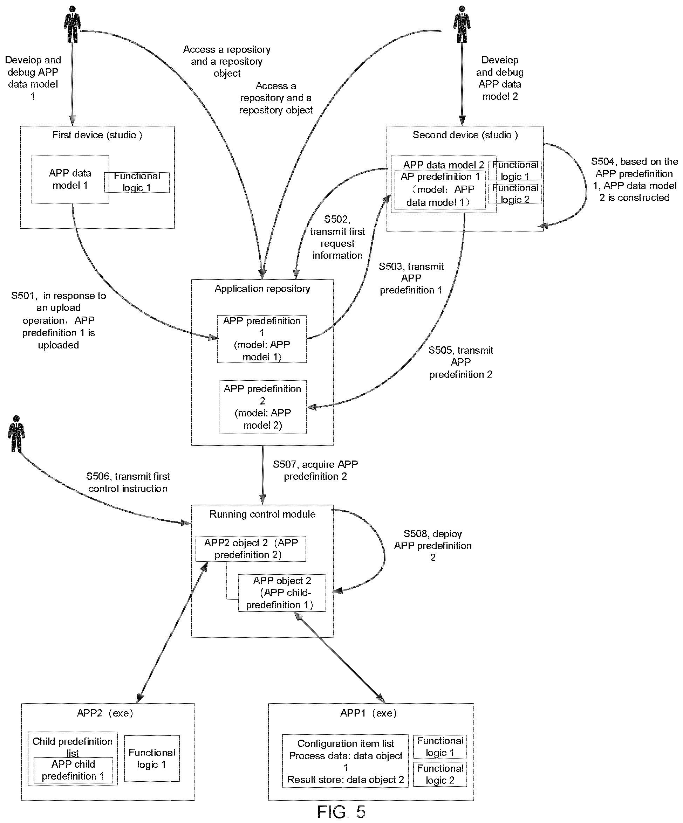

In an example, as shown in FIG. 5, the embodiments of the present disclosure provide an operation and maintenance system, including an application repository, a running control device, and devices in a plurality of development studios. The application repository communicates with the devices in the plurality of development studios and the running control device, respectively.

Herein, the application repository may be used to store predefinitions of the application (also referred to as APP predefinitions). When the application repository receives an access request from a user, the application repository may verify the user's right (such as verifying whether the user's account and corresponding password are consistent with the stored account and password). When the user has an access right (the user's account and corresponding password are consistent with the stored account and password), the application repository may allow the user to access predefinitions of applications stored in the application repository.

In actual applications, the application repository may be a server. The server may have a plurality of interfaces, and the plurality of interfaces may be used to exchange information with the devices in the development studio.

Herein, the development studio refers to a place where a developer develops an application. That is, the developer may use devices (such as computers, PCs, etc.) in the development studio to develop an application and a data model of the application. In response to the upload operation, the device in the development studio may also create a predefinition of the application according to the data model of the application, and upload the predefinition of the application to the application repository.

Herein, the running control device may be used to control the creation, running and termination of the predefinition of the application. For example, the running control device transmits the predefinition of the application to the target node, so that the target node may run the deployed application. When the application has a child application, the target node may also run the child application.

In actual applications, the running control device may be a server, a computer, etc. The embodiments of the present disclosure do not specifically limit the specific form of the running control device. The running control device may perform human computer interaction with the user through one or more manners, such as a keyboard, a touchpad, a touch screen, a remote control, voice interaction or a handwriting device.

Based on the above operation and maintenance system of the application, as shown in FIG. 5, the method provided by the embodiments of the present disclosure may include S501 to S505.

In S501, in response to an upload operation, the first device uploads APP predefinition 1 corresponding to APP1 to the application repository. Correspondingly, the application repository receives and stores the APP predefinition 1 of the device from the development studio.

Herein, the first device may refer to a device in a development studio corresponding to the first application. Developers may use the device in the development studio to develop the data model device of the application. The application repository may be used to store an uploaded APP predefinition. The predefinition of the application may be a group of specific configuration values for the attribute of the data model of the application. Specifically, reference may be made to the following description, which will not be repeated herein.

In an example, the developer may complete the development of the APP data model 1 in the development studio, and upload the predefinition of the second application to the application repository through the device of the development studio.

Herein, the configuration item list of the first application may be used to store a code file, a script file, a program file, etc., of the first application. The content of the configuration item list may be stored in the form of key-value. The configuration item list may also modify the key-value of the content in the list in response to the configuration operation of the user.

It should be noted that after the developer stores the developed app in the application repository, other developers may acquire the developed app from the application repository and use the acquired app as a part to assemble a new app.

In S502, the application repository receives first request information from the second device.

Herein, the second device may refer to a device in a development studio that develops the second application. The first request information is used to request acquiring APP predefinition 1.

In S503, the application repository transmits the APP predefinition 1 to the second device. Correspondingly, the second device receives the APP predefinition 1 from the application repository.

In S504, the second device constructs an APP data model 2 based on the APP predefinition 1.

In an example, the second device may use the predefinition of the first application as a child predefinition of the second application. Furthermore, the second device may use the data model of the first application as a child model of the data model of the second application to construct the data model of the second application.

In S505, the second device transmits the APP predefinition 2 to the application repository. Correspondingly, the application repository receives and stores the predefinition 2 of the second application from the second device.

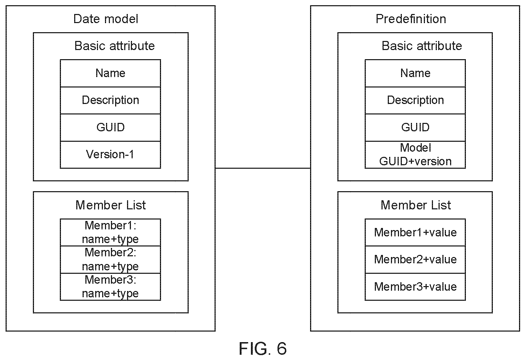

Herein, the APP predefinition 2 is generated according to the APP data model 2. Specifically, reference may made to the description of the association relationship between the predefinition and data model in FIG. 6 below, which will not be repeated herein.

In S506, a running control module receives a first control instruction.

Herein, the first control instruction may be used to indicate the deployment and running of the second application. For example, the first control instruction may include an identifier of the second application or an identifier of configuration information of the second application.

In an example, the first control instruction may be an instruction transmitted by an administrator to the running control module through the used device, or may be an instruction transmitted by the application repository in response to the operation of the administrator.

Furthermore, the first control instruction may also be used to indicate a deployment node, a running resource, etc., for running the second application. For example, the running resource may include a CPU, a memory, etc.

In S507, the running control module acquires APP predefinition 2 from the application repository in response to the first control instruction.

In S508, the running control module deploys the APP predefinition 2.

Herein, the running control module may create an APP object 2 according to the APP predefinition 2 and run the APP object 2. Since there is a parent-child relationship between APP2 and APP1, the running control module may also create APP object 1 according to the child predefinition (APP predefinition 1) of the APP predefinition 2, and deploy and run the APP object 1 on the corresponding running resource.

In an example, when the first control instruction is further used to indicate a deployment node that runs the APP object 2, the running control module may transmit the APP predefinition 2 to the node, so that the deployment node may run the APP predefinition 2 by using the corresponding running resource.

It should be noted that when the APP predefinition 2 is running, the creation, running and termination of APP predefinition 1 may be controlled. For example, the APP predefinition 2 may control the creation, running and termination of the APP predefinition 1 through a program script. That is, the functional logic of the APP object 2 may start and stop the APP object 1.

In an example, as shown in FIG. 5, when the running control module runs the APP object 2, a program file (exe) of the APP 2 may be generated through digital twin, and a program file (exe) of of the APP 1 may be generated through the digital twin.

Herein, the program file of APP2 may include a child predefinition list. The program file of APP1 may include a configuration item list. The configuration item list may include data to be processed (i.e., data object 1) and a data processing result (i.e., data object 2).

Based on the technical solutions shown in FIG. 5, through the interaction between the application repository and the running control module, the control of the lifecycle of the second application associated with the first application may be implemented based on the control of the lifecycle of the first application.

The concept of predefinition is mentioned in the present disclosure. The predefinition is a group of specific configuration values for attributes of a data model. The predefinition records configuration information of the data model. The predefinition is used to instantiate an object. Instantiating an object means constructing a structure of the object according to a structure of the object's model and taking a parameter value as an initial value of the object. The predefinition may also be referenced by other models as a child predefinition.

For example, when a data model is created, operations may include: building a new model, assigning a name and an identifier; adding a member, specifying a member type; deleting a member; adding or deleting a child predefinition; setting an initial value for the child predefinition; updating a model version; publishing a certain model version generation predefinition, etc. When a predefinition is created, operations may include: specifying a certain model version publishment (establishment) predefinition; assigning a name and an identifier; setting parameter values (an attribute and a member) for the predefinition, etc.

Exemplarily, FIG. 6 is a schematic diagram of a relationship between a data model and a predefinition provided by the embodiments of the present disclosure.

As shown in FIG. 6, the data model may include a basic attribute and a member list; the basic attribute may include information, such as a name, a description, a GUID, a version, etc.; the member list may include information such as "member 1: name+type", "member 2: name+type", "member 3: name+type", etc.

The predefinition may include a basic attribute and a member list; the basic attribute may include information, such as a name, a description, a GUID, a model GUID+version, etc.; the member list may include information such as "member 1+value", "member 2+value", "member 3+value", etc.

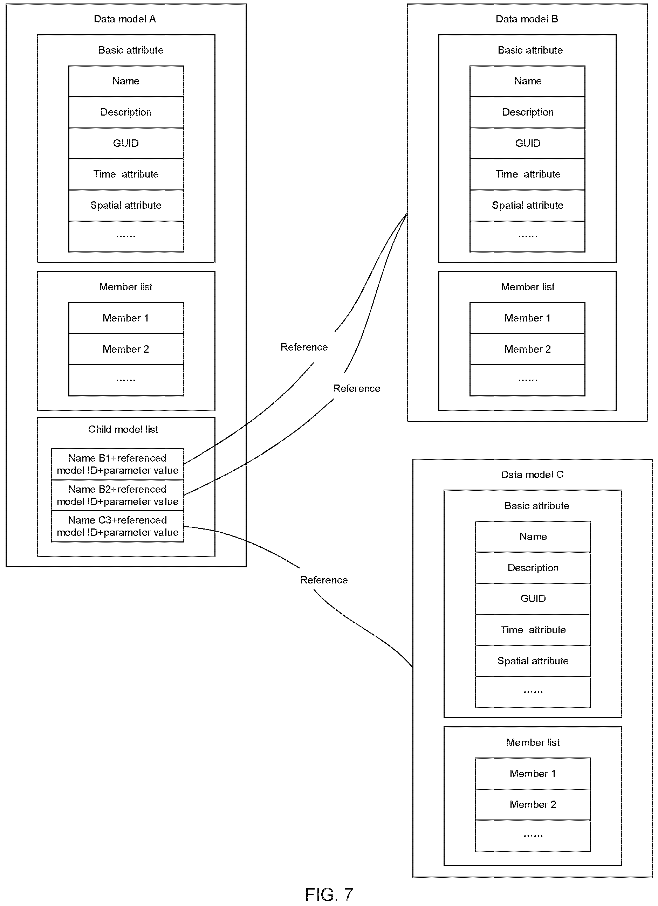

Exemplarily, FIG. 7 is a schematic diagram of a data model provided by the embodiments of the present disclosure. As shown in FIG. 7, the data model may include: a basic attribute, a member list, and a child model list. A data model with a children model is a composite data model. For example, in FIG. 7, the data model A is a composite data model, and the data model B and the data model C are child models of the data model A.

In a data model, a basic attribute describes an inherent attribute of data, including a name, a description, a GUID, a time attribute (such as precision), a spatial attribute (such as a coordinate system, or a geometric shape), etc.; a member list describes freely defined fields, and each member describes a field name and a data type of the member, such as: member 1, member 2, etc. The child model list records identifiers of data predefinition of a data model referenced as a child model, and establishes a dependency relationship between the child model and the data model. For example, a child model list of data model A includes identifiers (such as "Name B1+referenced model ID+parameter value", "Name B2+referenced model ID+parameter value", "Name C3+referenced model ID+parameter value", etc.) of data predefinitions of the data model B and the data model C.

For example, a motor device has parameters, such as a speed, a temperature, and a current. A data model of the motor device is established. The data model of the motor device may include members of a speed, a temperature, and a current. A same type of motors may be uniformly described through the data model of the motor device.

For another example, assuming that there are fixed disk production lines, static disk production lines, and final assembly production lines inside a compressor workshop, a data model of the compressor workshop is established. The data model of the compressor workshop may include a child model inside: fixed disk production lines, static disk production lines, final assembly production lines, etc. The data model of the compressor workshop may describe a same type of compressor workshop models.

It can be understood that in actual implementation, the operation and maintenance system described in the embodiments of the present disclosure may contain one or more hardware structures and/or software modules for implementing the aforementioned corresponding application management method and application subscription method, and these performed hardware structures and/or software modules may constitute an electronic device. Those skilled in the art should easily realize that the present disclosure is able to be implemented in the form of hardware or a combination of hardware and computer software in combination with algorithms and steps described in the embodiments disclosed in the present disclosure. Whether a certain function is implemented by hardware or by computer software driving hardware depends on the specific application and design constraint conditions of the technical solutions. A skilled person may use different methods for each specific application, to implement the described functions, but such implementation should not be considered beyond the scope of the present disclosure.

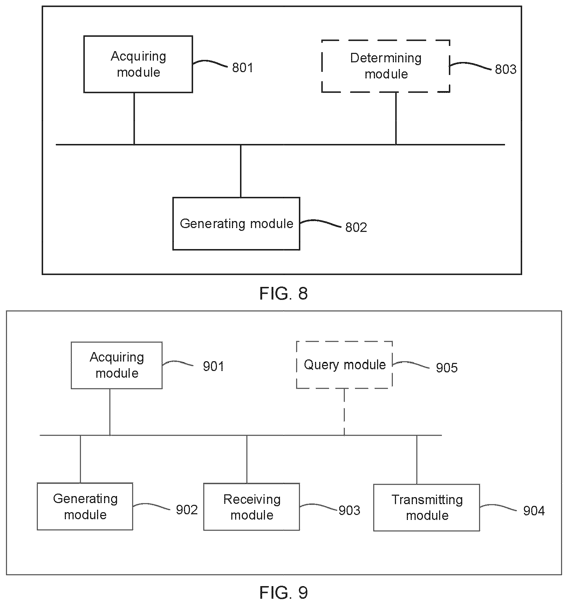

Based on this understanding, taking the hardware structures and/or software modules contained in the operation and maintenance system as an example, an application management apparatus that may be applied to the above operation and maintenance system (such as a hardware device corresponding to the operation and maintenance system) is provided by the embodiments of the present disclosure. FIG. 8 is a structural schematic diagram of an application management apparatus provided by the embodiments of the present disclosure. As shown in FIG. 8, the application management apparatus may include: an acquiring module 801, configured to acquire a data model of a first application, where the data model of the first application includes program codes for implementing a function of the first application; and a generating module 802, configured to generate a program entity corresponding to the first application according to the data model of the first application.

In some implementations, the data model includes an attribute, and the attribute of the first application includes at least one of a name and version information of the first application.

In some implementations, the attribute of the first application further includes an identifier of the data model of the first application, where the identifier of the data model has uniqueness.

In some implementations, the attribute of the first application further includes at least one of a deployment node corresponding to the first application and a running resource corresponding to the first application.

In some implementations, the generating module 802 is specifically configured to: determine configuration information of the first application according to the data model of the first application, the configuration information of the first application is used to indicate a configuration value of an attribute of the data model of the first application; and create a program entity of the first application according to the configuration information of the first application.

In some implementations, the data model of the first application is further used to indicate the function of the first application.

In some implementations, as shown in FIG. 8, the apparatus further includes a determining module 803, configured to determine a running resource corresponding to the first application, and run the program entity corresponding to the first application on the running resource corresponding to the first application.

The embodiments of the present disclosure further provide an application subscription apparatus correspondingly, which may be applied to the above operation and maintenance system. FIG. 9 is a structural schematic diagram of an application subscription apparatus provided by the embodiments of the present disclosure. As shown in FIG. 9, the application subscription apparatus may include: an acquiring module 901, configured to acquire a data model of a first application, where the data model of the first application includes program codes for implementing a function of the first application; a generating module 902, configured to generate a program entity corresponding to the first application according to the data model of the first application; a receiving module 903, configured to receive subscription information for subscribing information of the first application; and a transmitting module 904 is configured to transmit first indication information related to the running state of the program entity corresponding to the first application.

In some implementations, the generating module 902 is specifically configured to: determine configuration information of the first application according to the data model of the first application, where the configuration information of the first application is used to indicate a configuration value of an attribute of the data model of the first application; and create a program entity of the first application according to the configuration information of the first application.

In some implementations, the first indication information includes a state of the program entity corresponding to the first application; where the state of the program entity includes any one of a creation state, a running state and a termination state of the program entity.

In some implementations, the subscription information is further used to subscribe a preset event related to the first application and change information of the attribute of the first application.

In some implementations, the transmitting module 904 is further configure to: transmit first notification information in a case where the state of the program entity corresponding to the first application changes, where the first notification information is used to notify that the state of the program entity corresponding to the first application has changed.

In some implementations, the receiving module 903 is further configured to receive query information, where the query information is used to query information of the first application, where the information of the first application includes information of a first attribute of the first application and information of a second attribute of the first application; the transmitting module 904 is further configured to transmit a query result, where the query result is used to indicate the information of the first application.

In some implementations, the information of the first attribute includes at least: identification information of the data model of the first application; and the information of the second attribute includes at least: a name of an attribute of the first application and identification information of the attribute of the first application.

In some implementations, as shown in FIG. 9, the apparatus further includes a query module 905, configured to search for a program entity of the first application according to identification information of the data model of the first application; and count a number of the program entities of the first application.

In some implementations, the query module 905 is specifically configured to search for the state of the program entity of the first application according to the identification information of the data model of the first application.

In some implementations, the query module 905 is specifically configured to search for the state of the program entity of the first application according to the identification information of the data model indicated by the configuration information of the first application.

As described above, various execution entities involved in the application management method and the application subscription method may be divided into functional modules according to the above method examples in the embodiments of the present disclosure. Herein, the above integrated modules may be implemented in the form of hardware, or may be implemented in the form of software functional module. In addition, it should also be noted that the division of the modules in the embodiments of the present disclosure is illustrated, which is only a logical functional division, and there may be other division manners in an actual implementation. For example, division of various functional modules may be performed corresponding to various functions, or two or more functions may be integrated into one processing module.

Regarding the application management apparatus and the application subscription apparatus in the above embodiments, a specific manner in which each module performs operations and the beneficial effects thereof have been described in detail in the above method embodiments, which will not be repeated herein.

The embodiments of the present disclosure further provide an electronic device, where the electronic device may be a hardware device in the operation and maintenance system. The electronic device includes: a processor and a memory that may store instructions executable by the processor; where when the processor is configured to execute the instructions, the electronic device is enabled to implement the methods according to the aforementioned embodiments.

In the exemplary embodiments, the embodiments of the present disclosure further provide a computer readable storage medium, and computer program instructions are stored on the computer readable storage medium; and when the computer program instructions are executed by an electronic device, so that the electronic device is enabled to implement the methods according to the aforementioned embodiments.

Optionally, the above computer readable storage medium may be a non-transitory computer readable storage medium, for example, the non-transitory computer readable storage medium may be a ROM, a random access memory (RAM), a CD-ROM, a magnetic tape, a floppy disk, an optical data storage device, etc.

In the exemplary embodiments, the embodiments of the present disclosure further provide a computer program product, including computer readable codes, or non-volatile computer readable storage medium carrying the computer readable codes, where when the computer readable codes are executed on an electronic device, a processor in the electronic device implements the methods according to the aforementioned embodiments.

Those skilled in the art, after considering the specification and practicing the contents disclosed herein, will easily conceive of other implementations of the present disclosure. The present disclosure aims to cover any variations, usages, or adaptive changes of the present disclosure, and those variations, usages, or adaptive changes follow general principles of the present disclosure and include common knowledge or customary technical means in the art that have not been applied for the present disclosure. The specification and the embodiments are only regarded as being exemplary, and a true scope and spirit of the present disclosure are indicated by the following claims.

It should be understood that the present disclosure is not limited to the precise structure described above and shown in the drawings, and various modifications and changes may be made without departing from its scope. The scope of the present disclosure is limited only by the appended claims.

## Claims

1. An application management method, **characterized in that** the method comprises:
acquiring a data model of a first application, wherein the data model of the first application comprises program codes of the first application, and the program codes are used to implement a function of the first application;
generating a program entity corresponding to the first application according to the data model of the first application.

2. The method according to claim 1, wherein the data model comprises an attribute, and the attribute of the first application comprises at least one of: a name and version information of the first application.

3. The method according to claim 2, wherein the attribute of the first application further comprises an identifier of the data model of the first application, wherein the identifier of the data model is a unique identifier.

4. The method according to claim 3, wherein the attribute of the first application further comprises at least one of: a deployment node corresponding to the first application and a running resource corresponding to the first application.

5. The method according to any one of claims 1 to **4,** wherein the generating the program entity corresponding to the first application according to the data model of the first application comprises:
determining configuration information of the first application according to the data model of the first application, wherein the configuration information of the first application is used to indicate a configuration value of an attribute of the data model of the first application; and
creating the program entity corresponding to the first application according to the configuration information of the first application.

6. The method according to claim 5, wherein the data model of the first application is further used to indicate the function of the first application.

7. The method according to claim 4, wherein the method further comprises:
determining the running resource corresponding to the first application, and running the program entity corresponding to the first application on the running resource corresponding to the first application.

8. An application subscription method, **characterized in that** the method comprises:
acquiring a data model of a first application, wherein the data model of the first application comprises program codes of the first application, and the program codes are used to implement a function of the first application;
generating a program entity corresponding to the first application according to the data model of the first application;
receiving subscription information, wherein the subscription information is used to subscribe information of the first application;
transmitting first indication information, wherein the first indication information is related to a running state of the program entity corresponding to the first application.

9. The method according to claim 8, wherein the generating the program entity corresponding to the first application according to the data model of the first application comprises:
determining configuration information of the first application according to the data model of the first application, wherein the configuration information of the first application is used to indicate a configuration value of an attribute of the data model of the first application;
creating the program entity corresponding to the first application according to the configuration information of the first application.

10. The method according to claim 9, wherein the first indication information comprises a state of the program entity corresponding to the first application;
wherein the state of the program entity comprises any one of: a creation state, a running state and a termination state of the program entity.

11. The method according to claim 8, wherein the subscription information is further used to subscribe a preset event related to the first application and change information of an attribute of the first application.

12. The method according to claim 11, wherein the method further comprises:
in a case where a state of the program entity corresponding to the first application changes, transmitting first notification information, wherein the first notification information is used to notify that the state of the program entity corresponding to the first application has changed.

13. The method according to any one of claims 8 to 12, wherein the method further comprises:
receiving query information, wherein the query information is used to query information of the first application, and the information of the first application comprises information of a first attribute of the first application and information of a second attribute of the first application;
transmitting a query result, wherein the query result is used to indicate the information of the first application.

14. The method according to claim 13, wherein
the information of the first attribute comprises at least: identification information of the data model of the first application;
the information of the second attribute comprises at least: a name of an attribute of the first application and identification information of the attribute of the first application.

15. The method according to claim 14, wherein querying the information of the first application comprises:
searching for a program entity of the first application according to the identification information of the data model of the first application; and
counting a number of the program entities of the first application.

16. The method according to claim 15, wherein querying the information of the first application comprises:
searching for a state of the program entity of the first application according to the identification information of the data model of the first application.

17. The method according to claim 15, wherein querying the information of the first application comprises:
searching for a state of the program entity of the first application according to the identification information of the data model indicated by the configuration information of the first application.

18. An application management apparatus, wherein the apparatus comprises:
an acquiring module, configured to acquire a data model of a first application, wherein the data model of the first application comprises program codes of the first application, and the program codes are used to implement a function of the first application; and
a generating module, configured to generate a program entity corresponding to the first application according to the data model of the first application.

19. An application subscription apparatus, wherein the apparatus comprises:
an acquiring module, configured to acquire a data model of a first application, wherein the data model of the first application comprises program codes of the first application, and the program codes are used to implement a function of the first application;
a generating module, configured to generate a program entity corresponding to the first application according to the data model of the first application;
a receiving module, configured to receive subscription information, wherein the subscription information is used to subscribe information of the first application;
a transmitting module, configured to transmit first indication information, wherein the first indication information is related to a running state of the program entity corresponding to the first application.

20. An electronic device, **characterized by** comprising: a processor, a memory, and a computer program, wherein the computer program is stored on the memory, and in a case where the computer program is executed by the processor, so that the electronic device is enabled to implement the method according to any one of claims 1 to 7, or the method according to any one of claims 8 to 17.

21. A computer readable storage medium, **characterized in that** the computer readable storage medium comprises a computer program, and in a case where the computer program is executed on an electronic device, so that the electronic device is enabled to implement the method according to any one of claims 1 to 7, or the method according to any one of claims 8 to 17.

22. A computer program product, **characterized by** comprising computer readable codes, or non-volatile computer readable storage medium carrying the computer readable codes, wherein the computer readable codes are executed on an electronic device, so that a processor in the electronic device implements the method according to any one of claims 1 to 7, or the method according to any one of claims 8 to 17.
